# EUROPEAN PATENT APPLICATION

(11) **EP 3 767 607 A1**
(43) Date of publication of application: **20.01.2021**
(21) Application number: 20183837.2
(22) Date of filing: 02.07.2020
(51) Int. Cl.: G08G 5/00, G08G 5/04, G05D 1/10, G01C 21/00

(54) **METHODS AND SYSTEMS FOR MODIFYING FLIGHT PATH AROUND ZONE OF AVOIDANCE**

(30) Priority: 17.07.2019 US 201916514847
(71) Applicant: Honeywell International Inc., Morris Plains, NJ 07950 (US)
(72) Inventor: NATHAN, Visvanathan Thanigai, Morris Plains, NJ New Jersey 07950 (US); KANAGARAJAN, Sivakumar, Morris Plains, NJ New Jersey 07950 (US); RAO, Nayyar Azam Khan, Morris Plains, NJ New Jersey 07950 (US)
(74) Representative: Haseltine Lake Kempner LLP

(57) **Abstract**

Disclosed are methods, systems and non-transitory computer-readable medium for providing a flight path around a zone of avoidance located on a currently planned flight path of an aircraft. For instance, the method may include obtaining data of the zone of avoidance located on the currently planned flight path; determining a safe distance from the zone of avoidance based on a characteristic of the aircraft or a characteristic of the zone of avoidance; constructing a safety envelope outside of the zone of avoidance by defining the safety envelope based on the safe distance; constructing a plurality of alternate flight paths around the zone of avoidance such that each of the plurality of alternate flight paths avoids crossing into the zone of avoidance and avoids crossing in between the safety envelope and the zone of avoidance; and selecting an optimal flight path from among the plurality of alternate flight paths.

## Description

### TECHNICAL FIELD

Various embodiments of the present disclosure relate generally to computing a flight path of an aircraft and, more particularly, to computing an alternate flight path around a zone to be avoided by the aircraft.

### BACKGROUND

Aircraft traveling on a flight path may encounter hazards or airspace restrictions, such as hazardous weather, air traffic, temporary flight restrictions, no-fly zones, paid air corridors, unmanned aerial vehicles (UAVs) areas, and hot-air ballooning areas, and the like. Such hazards and airspace restrictions may be considered or represented as zones to be avoided by the aircraft, which are also referred to as "zones of avoidance" in this disclosure. If a zone of avoidance is ahead on the aircraft's current flight path, then the aircraft may need to find an alternate path around the zone.

Therefore, there is a need for automatic, real-time construction of such an alternate path. More particularly, there is a need for a computer-implemented method and a computer system that is configured for finding an alternate path that is both safe and economical, in real-time and in a deterministic manner. The present disclosure is directed to addressing one or more of these above-referenced challenges.

The background description provided herein is for the purpose of generally presenting the context of the disclosure. Unless otherwise indicated herein, the materials described in this section are not prior art to the claims in this application and are not admitted to be prior art, or suggestions of the prior art, by inclusion in this section.

### SUMMARY OF THE DISCLOSURE

According to certain aspects of the disclosure, systems and methods are disclosed for providing a flight path around a zone of avoidance located on a currently planned flight path of an aircraft.

For instance, the method may include: obtaining data of the zone of avoidance located on the currently planned flight path; determining a safe distance from the zone of avoidance based on a characteristic of the aircraft or a characteristic of the zone of avoidance; constructing a safety envelope outside of the zone of avoidance by defining the safety envelope based on the safe distance; constructing a plurality of alternate flight paths around the zone of avoidance such that each of the plurality of alternate flight paths deviates from the currently planned flight path before the zone of avoidance, avoids crossing into the zone of avoidance, avoids crossing in between the safety envelope and the zone of avoidance, and reconnects with the currently planned flight path after the zone of avoidance; and selecting an optimal flight path from among the plurality of alternate flight paths based on respective fuel expenditure or flight times of the plurality of alternate paths.

Furthermore, the system may include: one or more memory storing instructions; and one or more processors to execute the instructions to perform operations. The operations may include: obtaining data of the zone of avoidance located on the currently planned flight path; determining a safe distance from the zone of avoidance based on a characteristic of the aircraft or a characteristic of the zone of avoidance; constructing a safety envelope outside of the zone of avoidance by defining the safety envelope based on the safe distance; constructing a plurality of alternate flight paths around the zone of avoidance such that each of the plurality of alternate flight paths deviates from the currently planned flight path before the zone of avoidance, avoids crossing into the zone of avoidance, avoids crossing in between the safety envelope and the zone of avoidance, and reconnects with the currently planned flight path after the zone of avoidance; and selecting an optimal flight path from among the plurality of alternate flight paths based on respective fuel expenditure or flight times of the plurality of alternate paths.

Moreover, the non-transitory computer-readable medium storing instructions that, when executed by one or more processors, cause the one or more processors to perform a method for providing a flight path around a zone of avoidance located on a currently planned flight path of an aircraft, the method including: obtaining data of the zone of avoidance located on the currently planned flight path; determining a safe distance from the zone of avoidance based on a characteristic of the aircraft or a characteristic of the zone of avoidance; constructing a safety envelope outside of the zone of avoidance by defining the safety envelope based on the safe distance; constructing a plurality of alternate flight paths around the zone of avoidance such that each of the plurality of alternate flight paths deviates from the currently planned flight path before the zone of avoidance, avoids crossing into the zone of avoidance, avoids crossing in between the safety envelope and the zone of avoidance, and reconnects with the currently planned flight path after the zone of avoidance; and selecting an optimal flight path from among the plurality of alternate flight paths based on respective fuel expenditure or flight times of the plurality of alternate paths

Additional objects and advantages of the disclosed embodiments will be set forth in part in the description that follows, and in part will be apparent from the description, or may be learned by practice of the disclosed embodiments. The objects and advantages of the disclosed embodiments will be realized and attained by means of the elements and combinations particularly pointed out in the appended claims.

It is to be understood that both the foregoing general description and the following detailed description are exemplary and explanatory only and are not restrictive of the disclosed embodiments, as claimed.

### BRIEF DESCRIPTION OF THE DRAWINGS

The accompanying drawings, which are incorporated in and constitute a part of this specification, illustrate various exemplary embodiments and, together with the description, serve to explain principles of the disclosed embodiments.
FIG. 1 depicts an example environment in which methods, systems, and other aspects of the present disclosure may be implemented.
FIG. 2 depicts a system including an aircraft and one or more ground facilities, according to one or more embodiments.
FIG. 3 is a flowchart of a method for providing a flight path around a zone of avoidance located on a currently planned flight path of an aircraft, according to one or more embodiments.
FIG. 4 is a flowchart illustrating additional features of certain operations illustrated in FIG. 3, according to one or more embodiments.
FIGS. 5A-5B are illustrations of cross sections according to one or more embodiments.
FIG. 6 illustrates a process for evaluating a size of a cross section, according to according to one or more embodiments.
FIG. 7A illustrates a safety envelope, according to one or more embodiments.
FIG. 7B illustrates another safety envelope, according to one or more embodiments.
FIG. 8 illustrates the construction of an alternate flight path.

### DETAILED DESCRIPTION OF EMBODIMENTS

Various embodiments of the present disclosure relate generally to computing a flight path of an aircraft and, more particularly, to computing an alternate flight path around a zone to be avoided by the aircraft. This zone is also referred to as a zone of avoidance.

In general, the present disclosure is directed to a method that finds an alternate flight path around a zone of avoidance, which may represent a weather hazard zone or a restricted part of airspace. The proposed method finds the alternate flight path such that the alternate flight path is both safe and economical. As discussed in more detail below, the method determines a safe distance that the aircraft should maintain from the zone of avoidance. This safe distance is then used to define a safety envelope around a cross section of the zone of avoidance. Then, candidate alternate flight paths are constructed around the cross section. These candidate alternate flight paths have the characteristics of not only avoiding the cross section of the zone of avoidance, but remaining on or outside of the safety envelope. The economically optimal one among the candidate alternate flight paths is chosen to be the alternate flight path to be implemented.

The terminology used in this disclosure may be interpreted in its broadest reasonable manner, even though it is being used in conjunction with a detailed description of certain specific examples of the present disclosure. Indeed, certain terms may even be emphasized below; however, any terminology intended to be interpreted in any restricted manner will be overtly and specifically defined as such in this Detailed Description section. Both the foregoing general description and the following detailed description are exemplary and explanatory only and are not restrictive of the features, as claimed.

In this disclosure, the term "based on" means "based at least in part on." The term "one or more of," when preceding a list of items defined using the conjunction "and," denotes an alternative expression that may be satisfied by a single item in the list or a combination of items in the list. The term "or" is meant to be inclusive and means either, any, several, or all of the listed items. Relative terms, such as, "substantially" and "generally," are used to indicate a possible variation of ±10% of a stated or understood value. The singular forms "a," "an," and "the" include plural referents unless the context dictates otherwise. The term "exemplary" is used in the sense of "example" rather than "ideal."

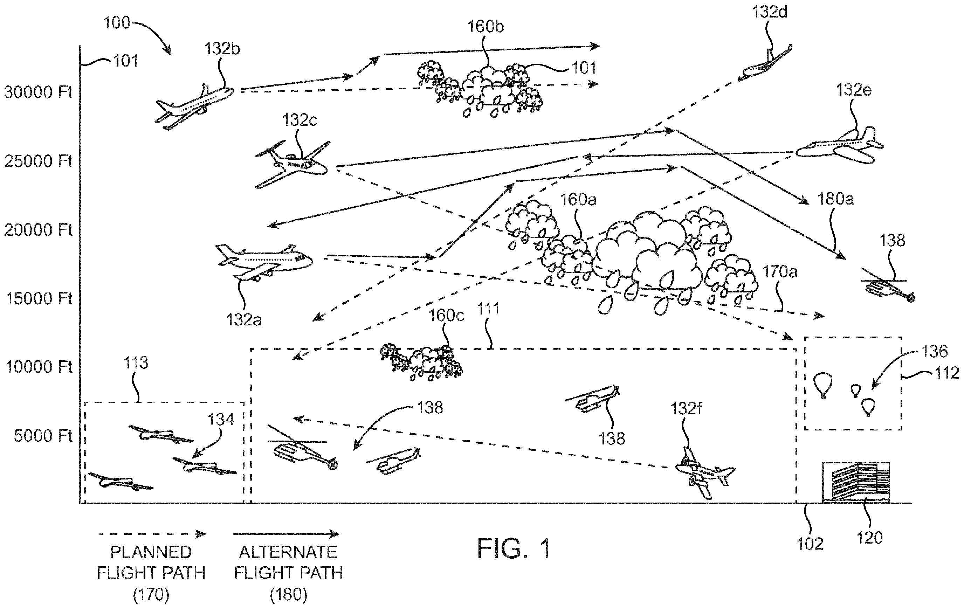

FIG. 1 illustrates an example of an environment in which methods, systems, and other aspects of this disclosure may be implemented. The environment of FIG. 1 includes an airspace 100 and one or more ground facilities 120. As illustrated in FIG. 1, The airspace 100 may have aircraft flying at various altitudes, such as airplanes 132a, 132b, 132c, 132d, 132e, 132f, unmanned aerial vehicles (UAVs) 134, hot-air balloons 136, and military aircraft 138. Any of these aircraft may be connected with one another and with the one or more ground facilities 120 over a computer network. The aircrafts and one or more ground facilities 120 may thereby form a connected environment for data flow. In FIG. 1, vertical axis 101 indicates altitude, and horizontal axis 102 indicates distance.

The airspace 100 may include one or more zones of avoidance. As examples of zones of avoidance, FIG. 1 illustrates no-fly zone 111 used by military aircraft 138, hot air ballooning area 112, UAV operating area 113, and hazardous weather zones 160a, 160b, 160c. Hazardous weather zones represent some form of weather phenomenon that is to be avoided by an aircraft. In this figure, the hazardous weather zones 160a, 160b, 160c are depicted as zones in the airspace 100 that represent thunderstorms. However, hazardous weather zones may represent other types of weather phenomenon.

In general, a "zone of avoidance" may be or represent any element that is to be avoided by an aircraft. Other examples of zones of avoidance include zones of air traffic, paid air corridors, and other areas of airspace in which operation is restricted. Whether or not a particular zone is a zone of avoidance may depend on the particular aircraft. For example, certain airspace restrictions may apply to some aircraft but not to others, and some aircraft may need to avoid other aircraft that have right-of-way.

FIG. 1 also illustrates planned flight paths 170 of aircraft in the airspace 100. In the illustration of FIG. 1, aircraft traveling along planned flight paths 170 are all are on course to travel through a zone of avoidance. To avoid the zones of avoidance, the aircraft may instead generate and travel along alternate flight paths 180 (which may also be called offset paths). For example, aircraft 132a in FIG. 1 is currently traveling on planned flight path 170a that enters into and through hazardous weather zone 160a. In order to avoid hazardous weather zone 160a, aircraft 132a would need to find an alternate flight path, such as alternate flight path 180a, around the zone of avoidance. As discussed in more detail below, the present disclosure provides a method of finding an alternate path by which an aircraft may avoid the zone of avoidance while maintaining distance from the zone of avoidance.

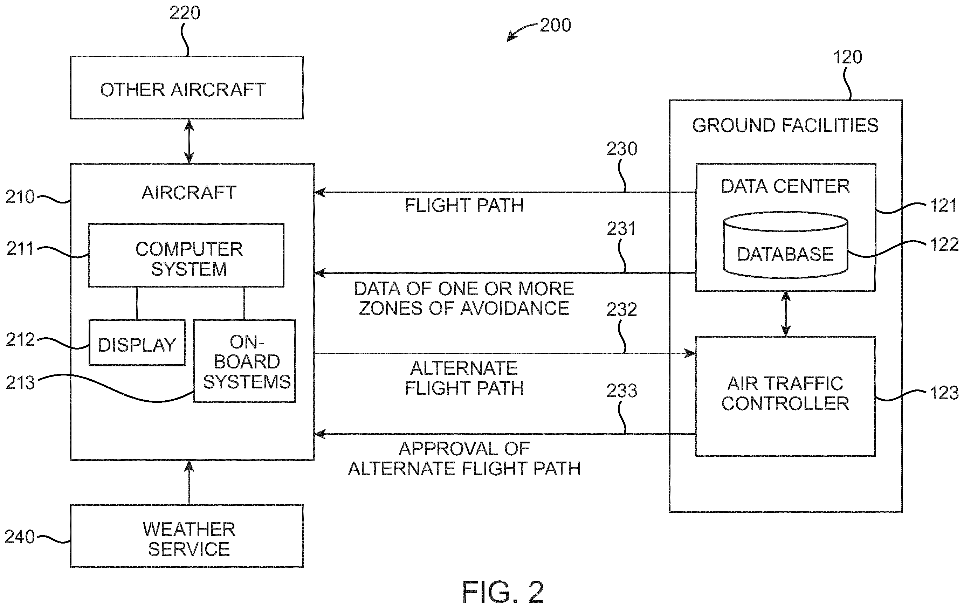

FIG. 2 illustrates a system 200 including an aircraft 210 and one or more ground facilities 120. Aircraft 210 may be connected to the one or more ground facilities 120 and also to other aircraft 220 through a computer network. Aircraft 210 may be a "connected aircraft" whose IT network is integrated with ground systems so as to permit real-time information flow to and from the aircraft. Connections may be implemented by various connectivity technologies (aircraft gateways) in the air as well as on the ground. Aircraft 210 may, for example, be represented by any of the airplanes 132a, 132b, 132c, 132d, 132e, 132f and UAVs 134 in the environment illustrated in FIG. 1. Aircraft 210 may include a computer system 211, a display 212 controlled by the computer system 211, and various on-board systems 213 connected to the computer system 211. The computer system 211 may be or include a flight management system (FMS). The FMS may include algorithms for drawing abeam lines, drawing tangent lines, and other relevant operations. The display 212 may be part of an on-board console of the aircraft. On-board systems 213 may include a radar, a traffic collision avoidance system (TCAS), and other avionics systems. Whether or not these features are included in aircraft 210 may depend on the type of aircraft. For example, if the aircraft 210 is a UAV, then display 212 might not be present.

The one or more ground facilities 120 may include a database 122 storing data of one or more zones of avoidance, such as data of no-fly zones, temporary flight restrictions, air traffic, pilot reports (PIREPs), weather forecasts, and real-time weather. The data may be usable by the one or more ground facilities 120 or by the aircraft 210 to compute an alternate flight path, and may be transmitted to the aircraft (as data 231). The database 122 may be part of a data center 121, which may also be referred to as a ground data center. The one or more ground facilities 120 may also include an air traffic controller 123, which, if separate from the data center 121, may be in communication with the data center 121 through a computer network. The one or more ground facilities 120 may include ground-based weather systems. Additionally, the one or more ground facilities 120 may include a computer system configured to perform alternate flight path computation.

At some time prior to the computation of the alternate flight path, the data center 121 or another component of the one or more ground facilities 120 may compute a flight path 230 and transmit the computed flight path 230 to the aircraft 210. This flight path 230 may serve as the planned flight path of the aircraft 210. In this disclosure, a planned flight path is sometimes referred to as a "currently planned flight path" to indicate that the planned flight path is the most current flight path of the aircraft at the time the alternate flight path is being computed.

As shown in FIG. 2, aircraft 210 may receive data 231 of one or more zones of avoidance from the data center 121 or another component of the one or more ground facilities 120. Aircraft 210 may additionally or alternatively obtain data of one or more zones of avoidance from weather service 240 (e.g., an XM WX satellite weather service) or from on-board systems. Data of one or more zones of avoidance may also be stored in an on-board database of the computer system 211 of the aircraft 210. The on-board database may store, for example, coordinates or other data of no-fly zones.

By using data of one or more zones of avoidance stored in the on-board database and obtained from any of the on-board or off-board sources mentioned above, the aircraft 210 may compute an alternate flight path 232. After computing the alternate flight path 232, the aircraft 210 may send the alternate flight path 232 to the air traffic controller 123. In response to receiving the alternate flight path 232, the air traffic controller 123 may return an approval 233 indicating that the alternate flight path 232 has been approved.

In other embodiments, the alternate flight path may be computed by an off-board computer system, such as a ground-based computer system of the one of more ground facilities 120. The ground-based computer system may have access to data of one or more zones of avoidance from any one or more of the above mentioned sources. For example, data gathered by or stored on aircraft 210 (or other aircraft 220) may be transmitted the ground-based computer system for use in computing the alternate flight path. The ground-based computer system may also have received data from the weather service 240. Once the alternate flight path is computed, the ground-based computer system may transmit the computed alternate flight path to the air traffic controller 123 for clearance (approval), before transmitting the computed alternate flight path to the aircraft 210. When the aircraft 210 receives the computed alternate flight path, the pilot or the computer system 211 of the aircraft 210 may then adopt the alternate flight path.

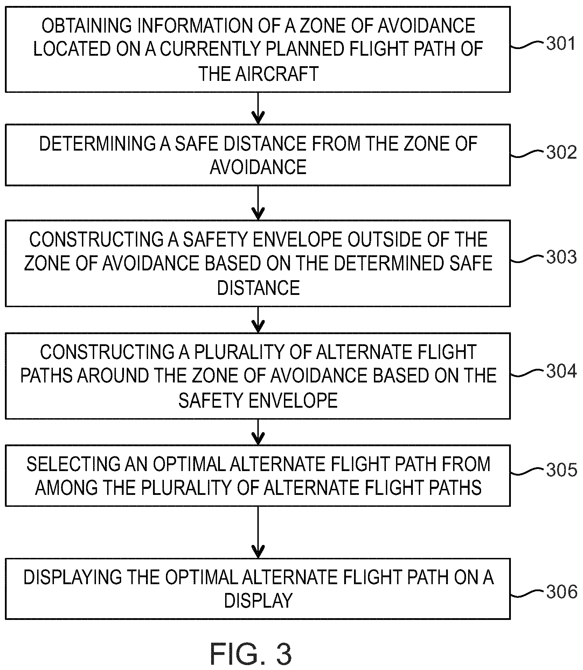

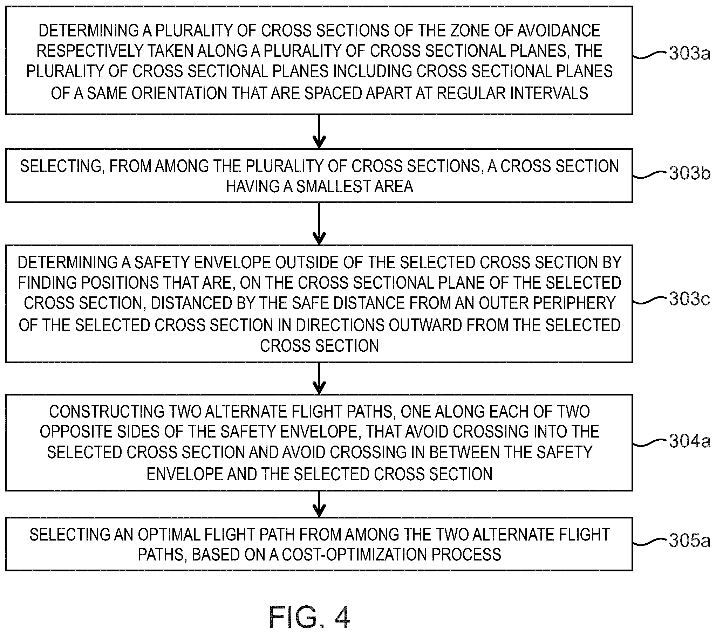

FIG. 3 illustrates a computer-implemented method for providing an alternate flight path around a zone of avoidance. The method includes: obtaining information of a zone of avoidance located on a currently planned flight path of the aircraft (operation 301); determining a safe distance from the zone of avoidance (operation 302); constructing a safety envelope outside of the zone of avoidance based on the determined safe distance (operation 303); constructing a plurality of alternate flight paths around the zone of avoidance based on the safety envelope (operation 304); determining an optimal flight path from among the plurality of alternate flight paths (operation 305); and displaying the optimal alternate flight path on a display (operation 306). FIG. 4 illustrates a more particularized example of operations 303 through 305 in FIG. 3. In FIG. 4, operations 303a through 303c are examples of operation 303 of FIG. 3, and operations 304a and 305a are examples of operations 304 and 305 of FIG. 3, respectively.

The method shown in FIG. 3 may, according to certain embodiments, be performed by the computer system 211 of the aircraft 210 of FIG. 2, although the disclosure is not limited thereto. In other embodiments, the method shown in FIG. 3 may be performed by an off-board computer system, such as the ground-based computer system of the one or more ground facilities 120. In general, the method of FIG. 3 may be performed by any suitable computer system having access to data used to perform the method. In certain embodiments, the method of FIG. 3 may be initiated by a flight crew when the flight crew observes that the currently planned flight path passes through a zone of avoidance.

In operation 301 of FIG. 1, which is obtaining data of a zone of avoidance located on a planned flight path of the aircraft, the data may be obtained from any one or more of the sources discussed above, which include ground facilities 120, other aircraft 220, weather service 230, the database on-board the aircraft 210, and on-board systems 213 of the aircraft 210.

As an example of obtaining data of a zone of avoidance from an on-board system, the aircraft may use an on-board radar to detect thunderstorms and other weather or aerial hazards by continuously scanning the three-dimensional airspace in front of the aircraft to obtain reflectivity data. The reflectivity data may be adjusted to account for movement of the aircraft 210. The computer system 211 may store the reflectivity data obtained in a memory of the computer system 211. The memory may be continuously updated with data from the radar so that the data is up-to-date whenever computation of an alternate flight path around a zone of avoidance is performed.

A zone of avoidance may be constructed based on data received from one or more sources. The zone of avoidance may be constructed three-dimensionally and may be assumed to be a closed envelope. The size, position, and boundaries of the zone of avoidance may be determined based on an analysis of the data received from the one or more sources, which may include data on the intensities of weather phenomenon at different points in space. Therefore, the zone of avoidance may be a representative model of a physical element such as weather phenomenon. In other situations, such as a well-defined no-fly zone, the data from the one or more sources may already include coordinates defining the boundaries of the zone of avoidance.

The zone of avoidance may be constructed such that every point inside, outside, and on the boundary of the zone of avoidance can be correlated to corresponding coordinates of a two-dimensional or three-dimensional coordinate system used in navigation, so that the computer system is able to compute the coordinates of points of interest, such as points at which the aircraft would enter and exit the zone of avoidance under the current flight path. The zone of avoidance may be displayed on display 212 for viewing by a pilot.

The method shown in FIG. 3 further includes an operation of determining a safe distance from the zone of avoidance (operation 302 of FIG. 3). The safe distance is a parameter that is used in the construction of the safety envelope.

The safe distance may be determined based on (e.g., a mathematical function of) one or a combination of factors, which may include characteristics of the airplane and characteristics of the zone of avoidance. Characteristics of the airplane may include the size, weight, and payload of the airplane. Characteristics of the zone of avoidance may include the type of weather phenomenon (e.g., hail, lighting or turbulence), and the intensity of the weather phenomenon as measured by the data of the zone of avoidance. The particular factors and relative importance of the factors may be configurable based on the objectives of the flight crew. For example, airplanes prioritizing passenger comfort may prefer a relatively larger safe distance when the zone of avoidance is hazardous weather.

Certain factors, such as certain characteristics of the airplane, may be manually specified prior to the determination of the safe distance. Other factors may be obtained from or computed based on data of the zone of avoidance obtained from any source. For example, the radar of the aircraft may measure the severity of a thunderstorm based on the intensity of the echo; the severity of the thunderstorm may thus serve as a characteristic of the zone of avoidance for purposes of determining the safe distance. When a zone of avoidance is hazardous weather, the safe distance may be inversely correlated with the severity of the weather phenomenon. For example, the lower the echo intensity of the thunderstorm, the lower the safe distance from the thunderstorm.

While FIG. 3 shows that the determining of the safety distance follows operation 301, this disclosure is not limited to the sequence of operations particularly illustrated in FIG. 3. The determining of the safe distance may be performed at any time prior to the time when the safe distance is actually used in an operation.

In operation 303 of FIG. 3, the safety envelope is constructed outside of the zone of avoidance based on the determined safety distance. The construction of the safety envelope may include: obtaining a cross section of the zone of avoidance; and constructing the safety envelope so that the safety envelope includes positions that are, on a cross sectional plane of the cross section, distanced by the safe distance from an outer periphery of the cross section in directions outward from the cross section.

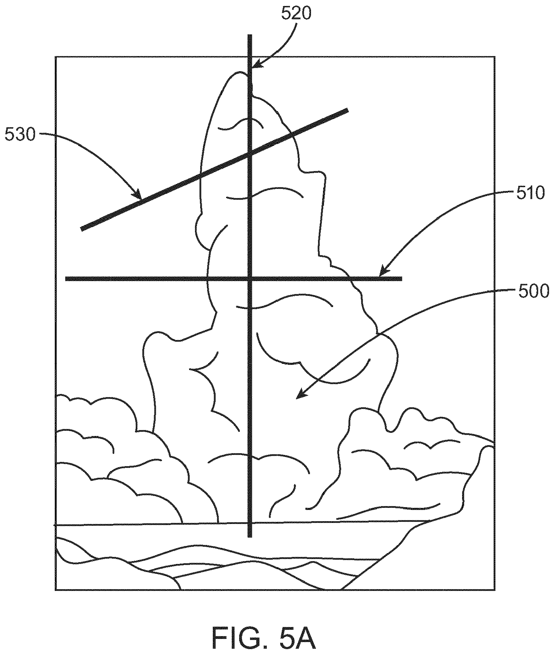

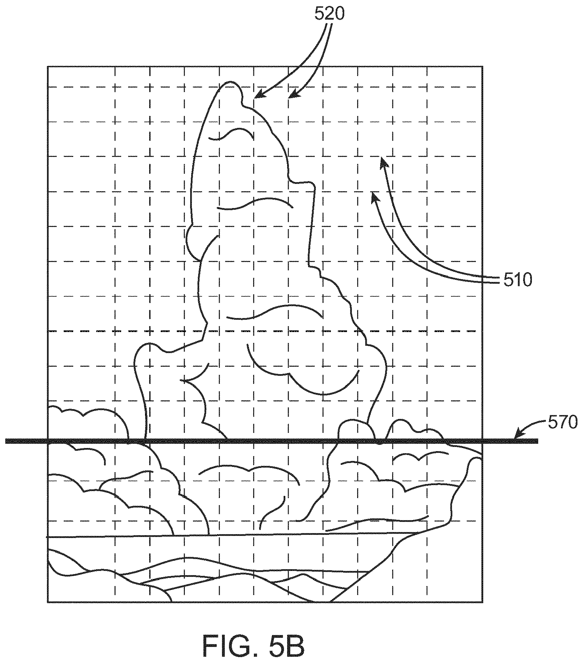

FIGS. 5A and 5B illustrate example cross sections for a cloud 500 whose volume defines a zone of avoidance. FIG. 5A illustrates examples of a horizontal cross sectional plane 510 resulting in a horizontal cross section of the zone of avoidance, a vertical cross sectional plane 520 resulting in a vertical cross section of the zone of avoidance, and an oblique cross sectional plane 530 resulting in an oblique cross section of the zone of avoidance. Horizontal cross-sections and horizontal cross sectional planes may also be referred to as lateral cross sections and lateral cross sectional planes, respectively. FIG. 5B illustrates an example of obtaining a plurality of cross sections of different orientations based on the currently planned flight path 570 of the aircraft.

Since the cross sections are used for defining the zone of avoidance for purposes of computing the alternate flight path, the number of cross sections and their orientations may be manually set or automatically determined depending on factors such as the type, general shape, and complexity of the zone of avoidance. For example, if the characteristics of the zone of avoidance indicate that it can be adequately avoided by a lateral alternate path, then only horizontal cross sections may be sufficient. On the other hand, if, for example, the characteristics of the zone of avoidance indicate that it might be more efficiently avoided by a vertical alternate path, then cross sections of one or more other orientations may be obtained. In general, zones of avoidance other than bad weather and traffic need only lateral alternate paths; for these zones of avoidance, taking only horizontal cross sections is often sufficient. In certain scenarios, a single cross section is sufficient.

Therefore, in certain situations and embodiments, only a single cross section of the zone of avoidance is taken; in other situations and embodiments, a plurality of cross sections of the zone of avoidance are taken.

When a plurality of cross sections are taken, the cross sectional planes along which the cross sections are taken may be of a single orientation (e.g., only horizontal cross sections or only cross sections at an orientation) or of multiple orientations (e.g., a combination of horizontal, vertical, and/or oblique cross sections). Oblique cross sectional planes (and resulting cross sections) may all be parallel or substantially parallel with one another, or may include a mixture of different oblique orientations. Horizontal cross sectional planes (and resulting cross sections) may be parallel or substantially parallel to the planned flight path of the aircraft. Vertical cross sectional planes (and resulting cross sections) may be perpendicular or substantially perpendicular to the planned flight path of the aircraft.

A plurality of cross sectional planes may include planes of a same orientation that are spaced apart at regular intervals. In FIG. 5B, the zone of avoidance (cloud 500) is cross sectioned horizontally along a plurality of cross sectional planes 510 positioned at regular intervals above and below the currently planned flight path 570, and is also is cross sectioned vertically along a plurality of cross sectional planes 520 positioned at regular intervals along the currently planned flight path 570 of the aircraft. The intervals between successive vertical and horizontal cross sectional planes may be a configurable parameter. For example, the intervals between vertical cross sections and between horizontal cross sections may be 500 feet. The planned path shown in the figure may be at an altitude of 25,000 feet. Oblique cross sectional planes, although not shown in FIG. 5B, may be selected based on the aforementioned intervals or cross sections. For example, oblique cross sectional planes may pass between two consecutive horizontal cross sections 520.

The range of altitudes and distances covered by the cross sectional planes and their resulting cross sections may depend on aircraft performance parameters and other factors that may constrain the placement of an alternate flight path. For example, if the aircraft is only 500 feet below the ceiling altitude, and the interval between planes is 500 feet, as in the example given in the above paragraph, then the cross sections may include only one cross section above the flight path.

In embodiments in which a plurality of cross sections of the zone of avoidance are taken and only a single safety envelope is constructed, then the safety envelope may be constructed for a single cross section selected from among the plurality of cross sections. In this case, since the single cross section may serve as the basis for constructing the alternate flight path around the zone of avoidance, this single cross section may be selected as the cross section that will likely provide the shortest alternate flight path. Since the size of the cross section may correlate with the offset of the alternate flight path from the currently planned flight path, a small cross section may provide the shortest alternate flight path around the zone of avoidance.

Thus, according to certain embodiments, each of the plurality of cross sections may be evaluated to determine a smallest cross section among the plurality of cross sections. Then, the safety envelope is constructed for that smallest cross section. See operations 303b and 303c of FIG. 4. In this context, "small" may refer to the actual cross-sectional area of the cross section, or another measure representative of the size of the cross-sectional area.

To estimate the size of a plurality of cross sections, one method is to compute a measure of cross sectional area by counting the number of pixels occupied by the cross section. By such a process, the actual area of the cross section may be computed using the pixels occupied by the cross section and a correspondence between the pixel representation and the distance represented by the pixels.

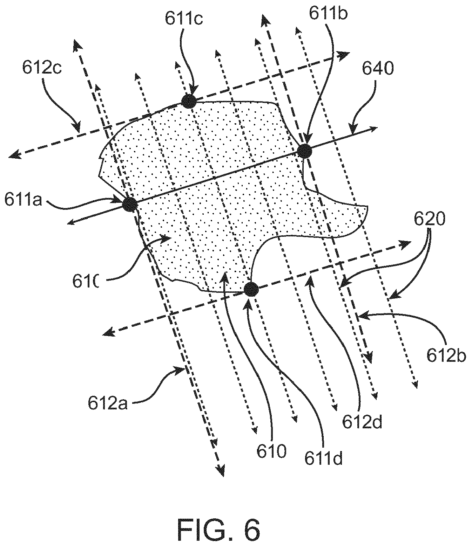

Another method for estimating the size of the plurality of cross sections is to construct a representative rectangle as shown in FIG. 6. In FIG. 6, the rectangle defined by lines 612a, 612b, 612c, and 612d is constructed to represent cross section 610. The construction of the rectangle is based on a line 640 representing the currently planned flight path. Line 640 may be the currently planned flight path, if the currently planned flight path is on the same plane as the cross-sectional plane of the cross section 610, or may be a projection of the currently planned flight path onto the cross-sectional plane, if the currently planned flight path is on a plane different from the plane represented by cross-sectional plane. As shown in FIG. 6, line 640 enters and exits the cross section 610 at points 611a and 611b, respectively. Based on points 611a and 611b, the left and right boundaries of the rectangle are computed to be on lines 612a and 612b (shown as dashed lines), which are defined as lines that intersect points 611a and 611b and are perpendicular to line 640.

To determine the other two boundaries of the rectangle, abeam lines 620 (shown as dotted lines) are drawn through the cross section 610 at regular intervals, such that the abeam lines 620 intersect with the outer periphery of the cross section 610 at various intersection points on each side of line 640. Among the intersection points, the points 611c and 611d furthest outward on each side of line 640 are noted. Then, the top and bottom boundaries of the rectangle are computed to be on lines 612c and 612d, which are defined as lines that intersect points 611c and 611d, respectively, and are parallel to line 640. Abeam lines 620 may be constructed using algorithms already available in an FMS (which may be an element of computer system 211). While points 611c and 611d are illustrated to be on the same abeam line in FIG. 6, the points may be on different abeam lines depending on the shape of the cross section 610 and the exact placement of the abeam lines.

The rectangle enclosed by lines 612a, 612b, 612c, and 612d is then used to represent the area of cross section 610. Similar rectangles may be constructed for other cross sections, and the smallest cross section is estimated by selecting the cross section whose representative rectangle is the smallest in area among all respective representative rectangles of the plurality of cross sections. It is noted that lines 612a, 612b, and 620 may be drawn at a degree that is not a right angle with respect to line 640, in which case the rectangle shown in FIG. 6 would instead be a rhombus.

Having selected the smallest (or otherwise optimal) cross section among the plurality of cross sections, the safety envelope may then be constructed outside of this selected cross section. It is noted that if only a single cross section of the zone of avoidance was taken, then the process of finding the smallest cross section would not be necessary.

The safety envelope may be constructed by finding positions that are, on the respective cross sectional plane of the cross section, distanced by the safe distance from an outer periphery of the cross section in directions outward from the cross section (see operation 303c of FIG. 4).

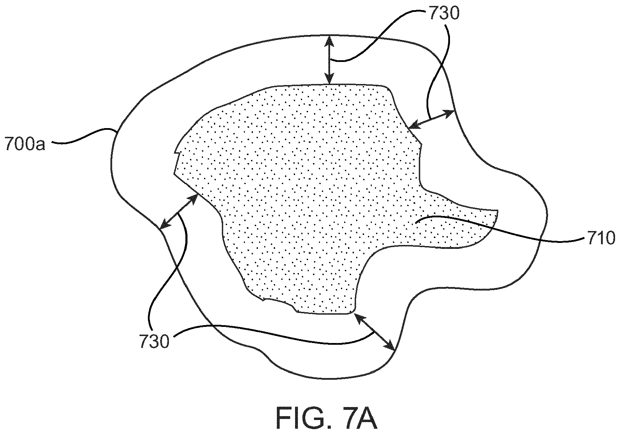

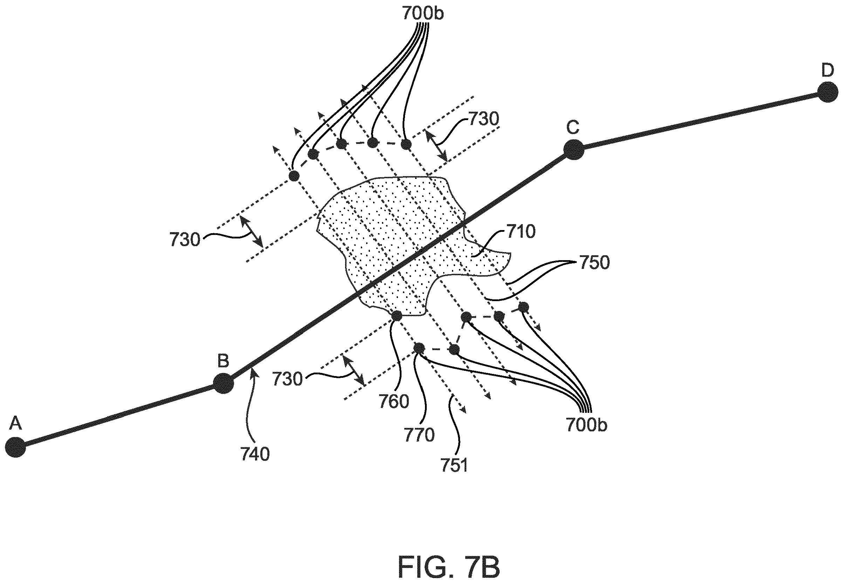

FIGS. 7A and 7B illustrate example methods of constructing a safety envelope for a given cross section of the zone of avoidance.

In FIG. 7A, safety envelope 700a is constructed around the entire outer periphery of the cross section 710 of the zone of avoidance. FIG. 7A shows that the safety envelope 700a is distanced (as measured along outward directions) from the outer periphery of the cross section by the safe distance 730. Safety envelope 700a may be constructed utilizing any suitable technique. For example, construction of the safety envelope 700a may involve computing points distanced from the outer periphery of the cross section 710 by the safe distance at angles normal to the outer periphery or at angles radiating from a center-of-mass point of the cross section 710, or expanding the outer periphery of the outer periphery of the cross section 710.

While FIG. 7A shows an example in which the safety envelope is constructed around the entire outer periphery of the cross section of the zone of avoidance, the safety envelope may instead be constructed around only a portion of the outer periphery of the cross section.

FIG. 7B illustrates another example method of constructing the safety envelope. In the method shown in FIG. 7B, the safety envelope 700b is constructed as a set of points outside of the two sides of cross section 710 that are lateral to a line 740 (line ABCD) representing the currently planned flight path of the aircraft. Line 740 may be the currently planned flight path if the currently flight path is on the same plane as the cross-sectional plane of the cross section 710, or a projection of the currently planned flight path onto the cross-sectional plane if the currently planned flight path is on a plane different from the plane represented by cross-sectional plane. Points A, B, C, and D represent waypoints on the currently planned flight path. These points divide the currently planned flight path into multiple legs, which are respectively represented by the segments connecting between points A and B, between points B and C, and points C and D. In FIG. 7B, the safety envelope 700b is constructed based on segment BC, which is the segment of the line 740 that crosses through the cross section 710.

To construct the safety envelope 700b shown in FIG. 7B, abeam lines 750 perpendicular to segment BC are computed along the segment BC at a regular interval. Using the abeam lines 750, the safety envelope 700b is calculated as a set of points on respective abeams 750 that are distanced from the intersection of the periphery of the cross section 710 and the respective abeams 750 by the safe distance 730 along the respective abeams 650. For example, point 760 is calculated as a point on abeam 751 at which abeam 751 intersects the outer periphery of the cross section 710. Then, point 770 is calculated as a point that is at the safe distance 730 away from point 760 (the distance being measured along abeam 751) on one side of segment BC. The point on abeam 751 located on the other side of the segment 740, and the remaining points of the safety envelope 700b may be computed in the same manner. As shown in FIG. 7B, each of the points of envelope 700b are distanced from the cross section 710 by safe distance 730 in directions along the abeam lines 750. In FIG. 7B, dashed lines linking between the points of safety envelope 700b are shown for purposes of visualization. These dashed lines are not necessarily a part of the envelope 700b and are not necessarily computed.

In FIG. 7B, the segment BC represents the only leg passing through the cross section 710. If the currently planned flight path is represented as having multiple legs through the cross section 710, then the above process may be performed for each leg.

In general, every point on at least a portion of the safety envelope may be distanced (as measured along outward directions) from the outer periphery of the cross section by the safe distance. For example, the safety envelope may be constructed such that any two points respectively on the outer periphery of the cross section and on the at least the portion of the envelope are distanced from each other by at least the safe distance; in such a situation, the aforementioned "outward directions" may generally be directions normal to the outer periphery of the cross section. However, the "outward directions" may be defined as outer directions outward from the cross section. For example, in FIG. 7B discussed above, the outward directions are the two directions orthogonal to a line passing through the cross section. The aforementioned "at least a portion of the safety envelope" may be the entire or substantially entire portion of the safety envelope.

In general, the safety envelope may be constructed on only one cross sectional plane, such as the cross sectional plane of the smallest cross section. However, the present disclosure is not limited thereto, and the safety envelope may exist beyond a single cross sectional plane.

When the safety envelope has been constructed, an alternate flight path around the zone of avoidance may then be constructed for the safety envelope. The alternate flight path is constructed so as to avoid crossing into the selected cross section and further avoid crossing in between the safety envelope and the selected cross section (or the zone of avoidance as a whole). That is, the alternate flight path avoids being in between any point on the safety envelope and any point of the cross section (or any point of the zone of avoidance as a whole). Here, the phrase "in between" as used in this context does not require the alternate flight path to avoid positions that are on the safety envelope itself. The alternate flight path may also be said to remain on or outside of the safety envelope. Two alternate flight paths may be constructed for the safety envelope, respectively traveling around two opposite sides of the zone of avoidance.

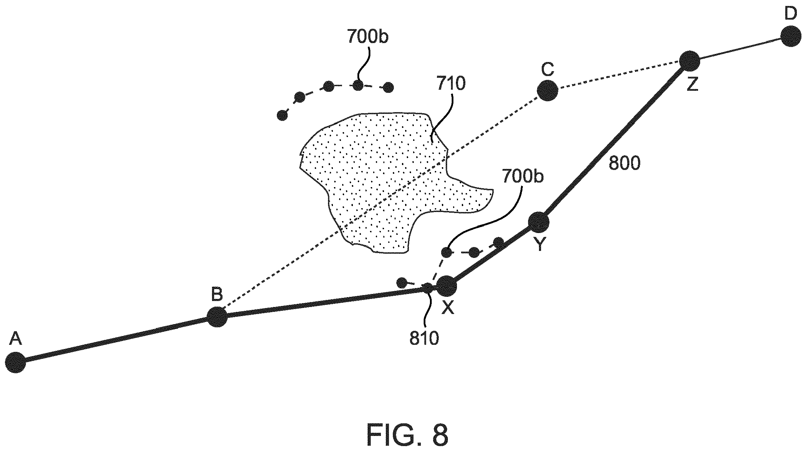

FIG. 8 illustrates an example method of constructing an alternate flight path 800 (defined by points B, X, Y, and Z) around one side of a given safety envelope. For purposes of illustration, safety envelope 700b of FIG. 7B is used as the safety envelope in FIG. 8, but the safety envelope used in the method illustrated in FIG. 8 can be another safety envelope. As shown in FIG. 8, the alternate flight path 800 diverges from the planned flight path at point B to circumvent the zone of avoidance, before converging with the planned flight path at point Z.

Referring to FIG. 8, the alternate flight path 800 may be constructed by starting the path so as to reach a point (point 810) that is among the points of envelope 700b and a position at which the aircraft is further controllable (within constraints such as the bank angle, etc.) to circumvent the cross section of the zone of avoidance while remaining on or outside of the safety envelope 700b. As shown, the alternate flight path 700 may be constructed so as to have a leg (segment XY), that is parallel to the leg (segment BC) passing through the cross section 610. If the currently planned flight path is represented as having multiple legs through the cross section 610, then the alternate flight path may have segments respectively parallel to each of the legs passing through the cross section.

While FIG. 8 shows an alternate flight path having straight legs, the flight path may also have curved legs, especially if a curved leg would provide a shorter total path. Additionally, while not expressly illustrated, it is understood that the alternate flight path may be traverse in between different cross sectional planes, and that the plan view shown in FIG. 8 can serve to represent an alternate flight path having portions on different plane other than the cross sectional plane of the cross section 710.

Another alternate flight path (not shown) may be constructed on the other side of the cross section 710 in the same or similar manner, so as to obtain two alternate flight paths, one on each side of the cross section lateral to the currently planned flight path.

An optimal alternate flight path may be determined from among the plurality of alternate flight paths around the all safety envelope. The process of selecting the optimal alternate flight path may be performed by a cost-optimization process based on one or a plurality of factors, such as the (estimated) fuel expenditure and flight time required by each of the plurality of alternate flight paths. In certain embodiments, the cost-optimization process may consider either fuel expenditure or flight time as the main consideration, so as to typically select the alternate flight path that minimizes the fuel expenditure or flight time being added to the originally planned flight path. In other embodiments, the cost-optimization process may consider one of these two factors as the sole consideration, or as one among a plurality of factors weighed against with other. Factors that are considered in the cost-optimization process may be input variables of a function. The function may be a cost function that is minimized during the cost-optimization process to find the set of inputs, and the associated alternate flight paths, that results in the lowest cost.

Fuel expenditure and flight time may be estimated based on any or combination of suitable factors, such as the characteristics of the aircraft (e.g., weight), the altitude of the alternate flight path, the ratio of lateral distance covered and altitude climbed for a given time and fuel expenditure under computed conditions or assumed average conditions, etc. These estimations may be based on the length of the alternate flight path, which can be computed by adding all legs of the alternate flight path, accounting for any climb distance if the alternate flight path was computed for a cross section that is higher or lower than the current altitude of the aircraft.

Referring to FIG. 2, the selected optimal alternate flight path may be displayed to the pilot on display 212 or on a portable device. If the optimal alternate flight path is computed by a computer system on-board the aircraft, the aircraft may send the optimal alternate flight path to an air traffic controller 123 to seek approval of the alternate flight path. When the optimal alternate flight path is approved by the air traffic controller 123, the optimal alternate flight path may be implemented as the flight path of the aircraft. Approval by the air traffic controller 123 may be automatic. If the optimal alternate flight path is computed by a computer system off-board the aircraft, then the off-board computer system may transmit the alternate flight path to the aircraft so as to result in the display of the alternate flight path on the aircraft. The off-board computer system may also obtain approval of the alternate flight path from the air traffic controller 123 before transmitting the alternate flight path to the aircraft, so that the aircraft avoids having to obtain the approval from the air traffic controller.

While the safety envelope may be constructed on only one cross sectional planes, such as the cross sectional plane of the smallest cross section, the safety envelope may alternatively be constructed so as to be extant on multiple cross sectional planes. For example, when a plurality of cross sections of the zone of avoidance are taken, the safety envelope may include a plurality of safety envelopes for the plurality of cross sections in a one-to-one correspondence between safety envelopes and cross section (i.e., for each of the plurality of cross sections, a respective safety envelope is constructed on the cross sectional plane of the respective cross section) or constructed for only a subset of the plurality of cross sections (i.e., on the cross sectional planes of the subset of the plurality of cross sections).

If a plurality of safety envelopes are constructed, a respective set of plural alternate flight paths may be constructed for each of the plurality of safety envelopes. Then, the selection of the optimal alternate flight path may be a selection from a candidate set that includes all alternate flight paths constructed. For example, if three cross sections were taken and two alternate flight paths are constructed for each of the three cross sections, then the total number of all alternate flight paths from which an optimal flight path is selected would be six.

According to embodiments discussed above, a safe and economical alternate flight path around an element to be avoided can be constructed. Additionally, the method of constructing the alternate flight path is deterministic and definitive. Additionally, the alternate flight path may be constructed automatically in real-time, thereby minimizing workload from the flight crew, especially when approval of the alternate flight path by the air traffic controller is automatic. Additionally, the embodiments discussed above may make use of a connected environment allowing data to be obtained from sources on-board and off-board an aircraft.

Furthermore, while selection of the optimal alternate flight path may be performed automatically, as discussed above, it is also possible for the selection to be performed manually. In this case, the candidate alternate flight paths that are constructed may be presented to the pilot (e.g., displayed on a display in the aircraft) for selection.

The method described herein may be performed by one or more processors that accept computer-readable (also called machine-readable) code containing a set of instructions that when executed by one or more of the processors carry out at least one of the methods described herein. The one or more processors may include any processor capable of executing a set of instructions (sequential or otherwise) that specify actions to be taken are included.

In one or more embodiments, the one or more processors may be included in a processing system. Each processor may include one or more of a CPU, a graphics processing unit, and a programmable DSP unit. The processing system further may include a memory subsystem including main RAM and/or a static RAM, and/or ROM. A bus subsystem may be included for communicating between the components. The processing system further may be a distributed processing system with processors coupled by a network. If the processing system requires a display, such a display may be included, e.g., a liquid crystal display (LCD) or a cathode ray tube (CRT) display. If manual data entry is required, the processing system also includes an input device such as one or more of an alphanumeric input unit such as a keyboard, a pointing control device such as a mouse, and so forth. The memory as used herein, if clear from the context and unless explicitly stated otherwise, also encompasses a storage system such as a disk drive. The processing system in some configurations may include a sound output device, and a network interface device. The memory subsystem thus includes a computer-readable carrier medium that carries computer-readable code (e.g., software) including a set of instructions to cause performing, when executed by one or more processors, one or more of the methods described herein. Note that when the method includes several elements, e.g., several steps, no ordering of such elements is implied, unless specifically stated. The software may reside in the hard disk, or may also reside, completely or at least partially, within the RAM and/or within the processor during execution thereof by the computer system. Thus, the memory and the processor also constitute computer-readable carrier medium carrying computer-readable code. Furthermore, a computer-readable storage medium may form, or be included in a computer program product.

The processing system discussed in the preceding paragraph may be computer system 211 shown in FIG. 2 or another processing system, including a processing system off-board the airplane. In certain embodiments, the processing system discussed in the preceding paragraph may be the ground-based computer system of the one or more ground facilities 120.

In other embodiments, the one or more processors operate as a standalone device or may be connected, e.g., networked to other processor(s), in a networked deployment, the one or more processors may operate in the capacity of a server or a user machine in server-user network environment, or as a peer machine in a peer-to-peer or distributed network environment. The one or more processors may form a personal computer (PC), a tablet PC, a set-top box (STB), a Personal Digital Assistant (PDA), a cellular telephone, a web appliance, a network router, switch or bridge, or any machine capable of executing a set of instructions (sequential or otherwise) that specify actions to be taken by that machine.

Thus, one embodiment of each of the methods described herein is in the form of a computer-readable carrier medium carrying a set of instructions, e.g., a computer program that is for execution on one or more processors, e.g., one or more processors that are part of web server arrangement. Thus, as will be appreciated by those skilled in the art, embodiments of the present invention may be embodied as a method, an apparatus such as a special purpose apparatus, an apparatus such as a data processing system, or a computer-readable carrier medium, e.g., a computer program product. The computer-readable carrier medium carries computer readable code including a set of instructions that when executed on one or more processors cause the processor or processors to implement a method. Accordingly, aspects of the present invention may take the form of a method, an entirely hardware embodiment, an entirely software embodiment or an embodiment combining software and hardware aspects. Furthermore, the present invention may take the form of carrier medium (e.g., a computer program product on a computer-readable storage medium) carrying computer-readable program code embodied in the medium.

The software may further be transmitted or received over a network via a network interface device. While the carrier medium may be a single medium, the term "carrier medium" should be taken to include a single medium or multiple media (e.g., a centralized or distributed database, and/or associated caches and servers) that store the one or more sets of instructions. The term "carrier medium" shall also be taken to include any medium that is capable of storing, encoding or carrying a set of instructions for execution by one or more of the processors and that cause the one or more processors to perform any one or more of the methodologies of the present invention. A carrier medium may take many forms, including but not limited to, non-volatile media, volatile media, and transmission media. Non-volatile media includes, for example, optical, magnetic disks, and magneto-optical disks. Volatile media includes dynamic memory, such as main memory. Transmission media includes coaxial cables, copper wire and fiber optics, including the wires that comprise a bus subsystem. Transmission media also may also take the form of acoustic or light waves, such as those generated during radio wave and infrared data communications. For example, the term "carrier medium" shall accordingly be taken to include, but not be limited to, solid-state memories, a computer product embodied in optical and magnetic media; a medium bearing a propagated signal detectable by at least one processor of one or more processors and representing a set of instructions that, when executed, implement a method; and a transmission medium in a network bearing a propagated signal detectable by at least one processor of the one or more processors and representing the set of instructions.

It will be understood that the steps of methods discussed are performed in one embodiment by an appropriate processor (or processors) of a processing (i.e., computer) system executing instructions (computer-readable code) stored in storage. It will also be understood that the invention is not limited to any particular implementation or programming technique and that the invention may be implemented using any appropriate techniques for implementing the functionality described herein. The invention is not limited to any particular programming language or operating system.

It should be appreciated that in the above description of example embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the Detailed Description are hereby expressly incorporated into this Detailed Description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those skilled in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

Thus, while there has been described what are believed to be the preferred embodiments of the invention, those skilled in the art will recognize that other and further modifications may be made thereto without departing from the spirit of the invention, and it is intended to claim all such changes and modifications as falling within the scope of the invention. Functionality may be added or deleted from the block diagrams and operations may be interchanged among functional blocks. Steps may be added or deleted to methods described within the scope of the present invention.

## Claims

1. A computer-implemented method for providing a flight path around a zone of avoidance located on a currently planned flight path of an aircraft, the method comprising:
obtaining data of the zone of avoidance located on the currently planned flight path;
determining a safe distance from the zone of avoidance based on a characteristic of the aircraft or a characteristic of the zone of avoidance;
constructing a safety envelope outside of the zone of avoidance by defining the safety envelope based on the safe distance;
constructing a plurality of alternate flight paths around the zone of avoidance such that each of the plurality of alternate flight paths deviates from the currently planned flight path before the zone of avoidance, avoids crossing into the zone of avoidance, avoids crossing in between the safety envelope and the zone of avoidance, and reconnects with the currently planned flight path after the zone of avoidance; and
selecting an optimal flight path from among the plurality of alternate flight paths based on respective fuel expenditure or flight times of the plurality of alternate paths.

2. The method according to claim 1, wherein the constructing the safety envelope comprises:
obtaining a cross section of the zone of avoidance based on the data of the zone of avoidance; and
constructing the safety envelope so that the safety envelope includes positions that are, on a cross sectional plane of the cross section, distanced by the safe distance from an outer periphery of the cross section in directions outward from the cross section.

3. The method according to claim 2, wherein the cross section is a selected cross section, and the obtaining the cross section comprises:
determining a plurality of cross sections of the zone of avoidance respectively taken along a plurality of cross sectional planes, the plurality of cross sectional planes including cross sectional planes of a same orientation that are spaced apart at regular intervals; and
selecting, from among the plurality of cross sections, a smallest cross section as the selected cross section.

4. The method according to claim 2, wherein the constructing the safety envelope comprises constructing the safety envelope around an entire outer periphery of the cross section.

5. The method according to claim 2, wherein the constructing the safety envelope comprises:
representing a portion of the currently planned flight path passing through the zone of avoidance as a line through the cross section;
determining abeam lines perpendicular to the line through the cross section; and
constructing the safety envelope such that the safety envelope comprises positions along the abeam lines that are distanced from the outer periphery of the cross section in directions perpendicular to the line through the cross section.

6. The method according to claim 1, wherein the plurality of alternate flight paths include two alternate flight paths, one alone each of two opposite sides of the safety envelope.

7. The method according to claim 1, wherein in the determining the safe distance, the safe distance is determined based on data of a weather phenomenon obtained by a radar of the aircraft.

8. The method according to claim 1, further comprising:
displaying the selected optimal flight path on a display.

9. A system for providing a flight path around a zone of avoidance located on a currently planned flight path of an aircraft, the system comprising:
a memory storing instructions; and
one or more processors to execute the instructions to perform operations including:
obtaining data of the zone of avoidance located on the currently planned flight path;
determining a safe distance from the zone of avoidance based on a characteristic of the aircraft or a characteristic of the zone of avoidance;
constructing a safety envelope outside of the zone of avoidance by defining the safety envelope based on the safe distance;
constructing a plurality of alternate flight paths around the zone of avoidance such that each of the plurality of alternate flight paths deviates from the currently planned flight path before the zone of avoidance, avoids crossing into the zone of avoidance, avoids crossing in between the safety envelope and the zone of avoidance, and reconnects with the currently planned flight path after the zone of avoidance; and
selecting an optimal flight path from among the plurality of alternate flight paths based on respective fuel expenditure or flight times of the plurality of alternate paths.

10. The system according to claim 9, wherein the constructing the safety envelope comprises:
obtaining a cross section of the zone of avoidance based on the data of the zone of avoidance; and
constructing the safety envelope so that the safety envelope includes positions that are, on a cross sectional plane of the cross section, distanced by the safe distance from an outer periphery of the cross section in directions outward from the cross section.

11. The system according to claim 10, wherein the cross section is a selected cross section, and the obtaining the cross section comprises:
determining a plurality of cross sections of the zone of avoidance respectively taken along a plurality of cross sectional planes, the plurality of cross sectional planes including cross sectional planes of a same orientation that are spaced apart at regular intervals; and
selecting, from among the plurality of cross sections, a smallest cross section as the selected cross section.

12. The system according to claim 10, wherein the constructing the safety envelope comprises constructing the safety envelope around an entire outer periphery of the cross section.

13. The method according to claim 10, wherein the constructing the safety envelope comprises:
representing a portion of the currently planned flight path passing through the zone of avoidance as a line through the cross section;
determining abeam lines perpendicular to the line through the cross section; and
constructing the safety envelope such that the safety envelope comprises positions along the abeam lines that are distanced from the outer periphery of the cross section in directions perpendicular to the line through the cross section.

14. The method according to claim 9, wherein the plurality of alternate flight paths include two alternate flight paths, one alone each of two opposite sides of the safety envelope.

15. The method according to claim 9, wherein in the determining the safe distance, the safe distance is determined based on data of a weather phenomenon obtained by a radar of the aircraft.
